# FASCICULE DE BREVET EUROPEEN

(11) **EP 0 853 891 B1**
(45) Date de publication et mention de la délivrance du brevet: **19.03.2003**
(21) Numéro de dépôt: 98400059.6
(22) Date de dépôt: 14.01.1998
(51) Int. Cl.: A23L 1/325, A23B 4/005, A23B 4/06

(54) **Préparation d'aliments à base de chair de poisson et/ou de crustacé, et aliments ainsi obtenus**
Herstellung von Nahrungsmitteln auf der Basis von Fischfleisch und/oder Fleisch von Krustentieren, und so erhaltene Nahrungsmittel
Preparing foodstuffs on the basis of fish and/or crustacea meat, and foodstuffs obtained thereby

(30) Priorité: 20.01.1997 FR 9700548
(43) Date de publication de la demande: 22.07.1998
(73) Titulaire: Neptune S.A., 78223 Viroflay Cedex (FR)
(72) Inventeur: Lesellier, Philippe, 14250 Tilly Sur Seulles (FR); Bigot, Jean-Luc, 14400 Bayeux (FR)
(74) Mandataire: Hurwic, Aleksander

(56) Documents cités:
- EP-A- 0 701 780
- WO-A-95/02337
- FR-A- 2 729 830
- US-A- 5 523 102
- J. JENSEN: "Fancy fish products, - a new trend" FOOD MARKETING & TECHNOLOGY, no. August, 1993, pages 6-8, XP002063126
- DATABASE WPI Section Ch, Week 8901 Derwent Publications Ltd., London, GB; Class D12, AN 89-003057 XP002044270 & JP 63 279 766 A (TOKAI KINZOKU KK) , 16 novembre 1988
- "Bewertung von tiefgefrorenen Blöcken aus Fischfillet und zugesetzter Farce sowie von daraus hergestellten Erzeugnissen" INFORMATIONEN FÜR DIE FISCHWIRTSCHAFT, vol. 30, no. 3, - 1983 DE, pages 168-173, XP002063127

## Description

La présente invention se rapporte principalement à un procédé de préparation d'aliments à base de chair de poisson et/ou de crustacé et analogue et aux aliments ainsi obtenus par ledit procédé.

Il est connu d'emballer sous vide des portions individuelles de poisson dans des sachets de cuisson. Les sachets sont ensuite portés à haute température, ce qui en assure la cuisson et la pasteurisation. Ainsi, d'une part, l'on assure la coagulation des protéines et, d'autre part, l'on augmente sa durée de conservation.

Malheureusement, la cuisson traditionnelle conduit à la destruction partielle de l'aliment. D'une part, l'on assiste à une exsudation d'un liquide aqueux contenant des protéines coagulées. D'autre part, la cuisson dégrade les propriétés rhéologiques de l'aliment. Cette dégradation est particulièrement marquée dans le cas du poisson dont la chair se raffermit et s'assèche.

Il en résulte une dégradation des propriétés organoleptiques de l'aliment cuit. De plus, le poisson baignant dans une phase aqueuse exsudative a un aspect désagréable pouvant conduire au rejet du produit par la clientèle, notamment dans le cas de portions individuelles emballées sous vide dans des sachets transparents vendues dans les magasins en libre-service.

Le Brevet N° 2 705 868 propose une méthode de cuisson sous une pression de plusieurs bars de chair de poisson partiellement déshydraté emballé sous vide.

Bien que donnant généralement satisfaction, ce procédé provoque une diminution de la masse par perte d'eau et par suite de la valeur marchande de l'aliment.

Il est connu d'ajouter des additifs tels que polyphosphates sucres et/ou hydrocolloïdes dans de la chair de poissons, notamment avant congélation, pour éviter les pertes en eau par égouttage lors de la décongélation. Dans ces applications, ils jouent un rôle de cryoprotection. Ces mêmes additifs entrent dans des formules de produits "fantaisie" à base de chair, ou de pulpe de poissons et ont alors un rôle de liant ; ils permettent de redonner une forme et/ou de recompacter des débris ou des miettes de poissons.

Il est connu de mélanger des morceaux de poissons (75 à 90 %) et d'assurer la cohésion des morceaux en enrobant ces morceaux avec une pâte composée de chair de poissons et éventuellement d'additifs tels que sels et/ou protéines.

Le brevet FR-A-2 729 830 décrit un procédé de préparation de poisson cru congelé comportant une agglomération de morceaux grossiers de chair de poisson. Ce procédé se propose d'effectuer le traitement à une température comprise entre -10°C et -2°C, de manière à maintenir l'eau de constitution de la chair de poisson dans un état cristallisé pour éviter la perte de cette eau par exsudation. Toutefois, la cuisson ultérieure de l'aliment décrit dans le FR-A-2 729 830 devrait normalement conduire à une perte d'eau et de protéines par exsudation.

Les hydrocolloïdes, et particulièrement les carraghénanes, sont classiquement utilisés pour renforcer le réseau protéique, permettant d'obtenir des produits tranchables. Toutefois, les applications concernées sont des produits où la chair de poisson est broyée (pâtés de poisson par exemple), et ne conserve pas sa structure (Jensen, Food Marketing & Technology, August 1993, pp 6-8).

Il est connu de traiter les poissons par une solution de polyphosphate (trempage ou vaporisation) ; les polyphosphates semblent modifier l'état de surface des protéines, permettant d'éviter la perte d'eau depuis l'intérieur du muscle, en particulier lors de la surgélation du poisson (Gordon, Food Manufacture, July 1971, pp 57-58).

La Demanderesse a trouvé un mode d'incorporation particulier des rétenteurs d'eau, permettant de conserver la structure des fibres de la chair de poisson, et de limiter considérablement l'exsudation lors de la cuisson.

Toute tentative pour faire pénétrer dans la masse sans précautions particulières les composés rétenteurs d'eau, notamment par mélange sous action mécanique forte, se solde par une altération irréversible de la structure des fibres de la chair par des cassures physiques. Cette altération consiste en un fractionnement trop important de morceaux de chair dont les petites dimensions ne confèrent pas à l'aliment les qualités organoleptiques désirées et/ou en une altération des fibres formant chaque morceau.

C'est par conséquent un but de la présente invention d'offrir un aliment à base de chair de poisson et/ou de crustacé ayant de bonnes qualités organoleptiques.

C'est également un but de la présente invention d'offrir un tel aliment ayant un bel aspect.

C'est aussi un but de la présente invention d'offrir un produit alimentaire ayant une longue durée de conservation au froid positif ou en congélation.

C'est également un but de la présente invention d'offrir un procédé industriel de préparation d'aliment à base de chair poisson ou de crustacé ayant un faible coût de revient.

C'est aussi un but de la présente invention d'offrir un procédé de préparation d'un aliment à base de chair de poisson et/ou de crustacé avec des pertes en eau faibles, nulles ou même avec la possibilité d'hydratation de la chair.

C'est également un but de la présente invention d'offrir un tel procédé de préparation d'un aliment solide comportant des morceaux de grandes tailles de chair de poisson et/ou de crustacé. La taille d'un morceau dépend de la taille initiale des pièces de chair de poisson et/ou de crustacé disponibles. Elle peut par exemple être de l'ordre d'un centimètre pour les crevettes alors qu'elle sera de l'ordre de quelques centimètres à une dizaine de centimètres ou même à quelques dizaines de centimètres pour du filet de poisson.

Ces buts sont atteints selon l'invention par un procédé de mélange et/ou malaxage mécanique modéré de la chair de poisson, de crustacé et/ou analogue, c'est-à-dire un mélange ou malaxage évitant une altération irréversible importante de la structure des fibres de la chair, en présence de composés rétenteurs d'eau comestibles, notamment d'hydrocolloïdes comestibles. Le mélange et/ou malaxage est poursuivi jusqu'à l'obtention d'une répartition homogène dans la masse de la chair de la chair de poisson des composés rétenteurs d'eau et d'éventuels autres additifs.

La diffusion du ou des composé(s) rétenteur(s) d'eau d'agents de cohésion et d'autres additifs dans la masse de la chair de poisson ou de crustacé à traiter est ralentie par la taille importante des morceaux de chair, par la structure compacte de la chair que le procédé selon l'invention doit préserver, par l'absence d'agitation mécanique violente et par une température de traitement faible favorisant la conservation de la chair traitée en limitant la pullulation microbienne. Pour arriver à des temps de diffusion acceptables, on met en oeuvre des moyens mécaniques d'agitation, de mélange et/ou de malaxage, globaux ou locaux n'induisant pas dans la chair à traiter de contraintes susceptibles d'en détériorer sa structure.

Une répartition homogène dans la masse de la chair des composés rétenteurs d'eau améliore les qualités organoleptiques de l'aliment obtenu du fait des pertes d'eau réduites. On obtient ainsi moins de 2 % d'exsudat pour un produit traité et plus de 15 % pour un produit non traité.

Avantageusement, l'étape de mélange ou malaxage de la chair comporte une étape de barattage.

Avantageusement, le barattage est suivi par un formage et/ou dosage et une cuisson dans un emballage sous vide. Avantageusement, l'emballage reprend la forme naturelle d'éléments de poisson, notamment d'une darne ou d'un filet.

L'invention a principalement pour objet un procédé de préparation d'un aliment à base de chair de poisson ou de crustacé, caractérisé en ce qu'il comporte une étape d'introduction dans un appareil de mélange de la chair de poisson et/ou de crustacé et d'un composé rétenteur d'eau, notamment d'un hydrocolloïde, et à effectuer un mélange permettant la pénétration du composé rétenteur d'eau au coeur des morceaux de la chair de poisson et/ou de crustacé sans destruction de la structure de cette chair.

L'invention a également pour objet un procédé caractérisé en ce que la chair de poisson ou de crustacé comporte des morceaux ayant des dimensions supérieures à 1 cm.

L'invention a aussi pour objet un procédé caractérisé en ce que l'appareil de mélange est une baratte.

L'invention a égalemenet pour objet un procédé caractérisé en ce que le barattage s'effectue pendant une durée comprise entre un quart d'heure et cinq heures, de manière préférentielle entre une heure et trois heures.

L'invention a aussi pour objet un procédé caractérisé en ce que le mélange est effectué à une température comprise entre - 5° C et 2° C.

L'invention a également pour objet un procédé caractérisé en ce qu'il comporte une étape de refroidissement.

L'invention a aussi pour objet un procédé caractérisé en ce que le refroidissement est assuré par introduction dans l'appareil de mélange d'azote à partir d'une source d'azote liquide.

L'invention a également pour objet un procédé de fabrication d'un aliment, caractérisé en ce qu'il comporte une étape de mélange suivie par un dosage et/ou formage de la masse de chair de poisson texturé obtenu.

L'invention a aussi pour objet un procédé caractérisé en ce que le formage est effectué à une pression inférieure à 700.000 Pa.

L'invention a également pour objet un procédé caractérisé en ce que lors du dosage et/ou formage, on introduit une masse de chair de poisson et/ou de crustacé texturée dans un contenant ayant la forme d'un élément du poisson ou d'un crustacé à reproduire, notamment d'un filet ou d'une dame.

L'invention a aussi pour objet un procédé caractérisé en ce que le contenant est une barquette alimentaire en matière plastique et en ce qu'il comporte une étape de pose sous vide d'un opercule hermétique.

L'invention a également pour objet un procédé caractérisé en ce qu'il comporte en outre une étape de cuisson en autoclave.

L'invention a aussi pour objet un procédé caractérisé en ce qu'il comporte une étape de surgélation de l'aliment.

L'invention a également pour objet un aliment obtenu par le procédé selon l'invention.

L'invention sera mieux comprise au moyen de la description ci-après et des figures annexées données comme des exemples non limitatifs et sur lesquels :
- la figure 1 est un schéma explicatif du procédé selon la présente invention ;
- la figure 2 est une vue schématique illustrant la structure de l'aliment selon la présente invention ;
- la figure 3 comporte trois images obtenues au microscope électronique à balayage illustrant la structure d'une chair de poisson ayant subi uniquement une cuisson sous vide ;
- la figure 4 comporte trois images obtenues au microscope électronique de la chair de poisson ayant subi un traitement selon la présente invention.

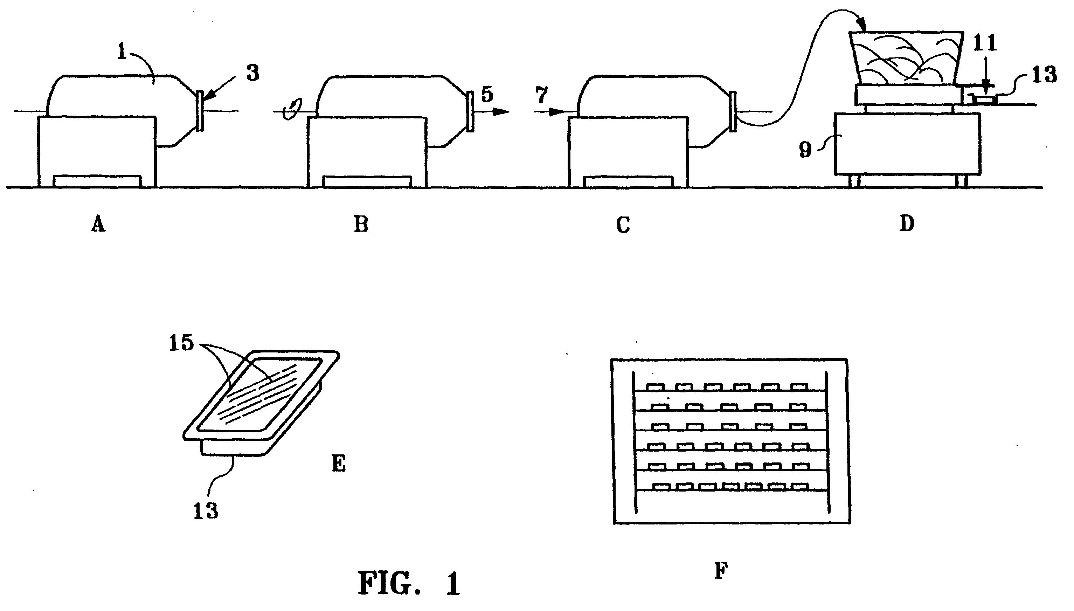

Sur la figure 1, on peut voir l'exemple préféré de réalisation du procédé selon la présente invention.

En A, on introduit les ingrédients dans un appareil accélérant la pénétration des composés rétenteurs d'eau, avantageusement dans une baratte 1 d'axe horizontal, les ingrédients. En variante, on utilise des mélangeurs, des agitateurs, des homogénéisateurs ou tout autre appareil assurant un mélange mécanique sans induire dans la chair des contraintes susceptibles d'entraîner la détérioration de la structure des fibres. On peut également utiliser des appareils notamment des piézo-électriques générant des vibrations acoustiques, ultrasonores ou infrasonores dans le mélange à traiter comportant au moins de la chair de poisson et/ou de crustacé et un composé rétenteur d'eau, notamment un hydrocolloïde. On peut également introduire des stabilisants, des colorants, des arômes, de l'eau, des huiles ou autres. Avantageusement, la chair de poisson ou de crustacé est introduite à une température comprise entre -10°C et +10°C, de préférence comprise entre -5°C et 2°C, par exemple égale à -1°C, -0,5°C ou 0°C. Aux températures inférieures à -5°C, la chair de poisson ou de crustacé a tendance à se figer, ce qu'on essaye d'éviter. Toutefois, il est également possible d'introduire du poisson surgelé dans la baratte, la température de la chair de poisson ou de crustacé augmentant par suite d'un chauffage et/ou par suite du malaxage effectué. Au contraire, au-delà de 10°C, la chair de poisson ou de crustacé risque de subir une dégradation bactériologique et une perte en eau.

On ferme hermétiquement la porte 3 de la baratte.

Avantageusement, la baratte 1 comporte des moyens de réglage de la vitesse de rotation permettant la sélection d'une vitesse de rotation extrêmement faible inférieure à un tour par minute, par exemple égale à 0,2 ou avantageusement à 0,1 tour par minute ou moins.

En B, comme symbolisé par la flèche 5, on diminue la pression interne régnant dans la baratte.

De manière surprenante, pour obtenir un aliment à base de chair de poisson ferme, c'est-à-dire un aliment dans lequel les myotomes de la chair de poisson sont fermés, il est avantageux de faire un vide partiel dans la baratte, ce qui provoque une ouverture temporaire des myotomes favorisant la pénétration dans la chair de poisson des additifs, notamment des hydrocolloïdes. Toutefois, la pression dans la baratte est de préférence suffisante pour que l'ouverture des myotomes soit réversible lors de la remontée à la pression atmosphérique. Une amélioration des résultats a été obtenue avec une pression régnant dans la baratte comprise entre 0,45 et 0,65 x 10⁵ Pa.

On peut également ajouter du surimi, des protéines de poisson, du fromage, des herbes, des oignons, des légumes, la garniture ou des sucres. Le barattage, c'est-à-dire la rotation de la baratte, dure entre quelques minutes et 5 heures, de préférence entre ¼ d'heure et 5 heures, avantageusement entre 1 heure et 3 heures, par exemple 2 heures, selon le taux de remplissage de la cuve.

La vitesse de rotation doit être d'autant plus faible que le diamètre de la baratte est important. La rotation de la baratte peut s'effectuer de manière continue dans un seul sens ou peut comporter une succession de cycles de rotation dans un sens unique ou avec changement du sens de rotation. Le barattage fait pénétrer les additifs dans la chair de poisson ou de crustacé et permet ainsi d'homogénéiser l'aliment.

En fonction de la température ambiante et de l'énergie apportée à la masse en cours de barattage, notamment par la rotation de la baratte 1, il peut s'avérer avantageux de refroidir le contenu de la baratte. Dans l'exemple illustré en C, la flèche 7 représente l'introduction d'azote provenant d'une source d'azote liquide.

En D, on effectue le formage de la masse obtenue par barattage. Avantageusement, le formage est effectué à basse pression, égal par exemple à 345 000 Pa, de manière à éviter de déchirer la chair de poisson ou de crustacé et ainsi de détruire la structure des fibres de l'aliment. La formeuse 9 comporte par exemple un piston 11 forçant l'aliment dans un conditionnement 13. Avantageusement, le conditionnement 13 a la forme d'un élément du poisson, par exemple d'un filet ou d'une darne ou d'un crustacé. Avantageusement, le fond du conditionnement 13 présente des irrégularités analogues à celles que présente l'élément du poisson ou du crustacé que l'on essaye de reproduire. Ces irrégularités formeront leur empreinte sur l'aliment selon la présente invention. On utilise comme conditionnement 13, par exemple des barquettes en polypropylène ou poly (éthylène/alcool vinilique) (EVOH). Ainsi, lors du formage, on assure l'agglomération de la masse texturée de chair de poisson ou de crustacé de manière à lui conférer la forme d'un élément, notamment d'un filet ou d'une dame.

Avantageusement, on effectue un formage à poids constant, la forme précise étant conférée par la forme du conditionnement 13. En variante, lors du formage, on dépose dans le contenant 13, non seulement la masse de chair de poisson texturé mais également une garniture. Le dépôt de la garniture peut s'effectuer au fond de la barquette, sur le dessus ou au moins un des côtés.

En E, le conditionnement 13 reçoit un opercule hermétique de scellement 15.

En F, on assure la cuisson de l'aliment.

La cuisson s'effectue par exemple en autoclave, cuisson vapeur ou autre. L'emballage sous vide de l'aliment évite la dilution de celui-ci lors de l'étape de cuisson. La cuisson est effectuée par exemple pendant une durée comprise entre 1/2 h et 4 h, de préférence entre 1 h et 3 h, à une température comprise entre 50° C et 100° C, de préférence entre 70° C et 90° C, par exemple égale à 75° C sous une pression comprise entre 0 et 4 10⁵ Pa, de préférence entre 10⁵ Pa et 3 10⁵ Pa, Par exemple égale à 2 10⁵ Pa. En variante, l'étape de cuisson est remplacée par une texturation à haute pression, par exemple comprise entre 2 10⁸ et 4 10⁸ Pa et/ou par une décontamination par rayonnement ionisant.

Le produit alimentaire emballé se conserve couramment de 45 à 60 jours au rayon froid (température inférieure à 5°C).

En variante, l'aliment selon la présente invention peut être, après l'étape D, E ou F, surgelé en vue de sa conservation et/ou de sa commercialisation.

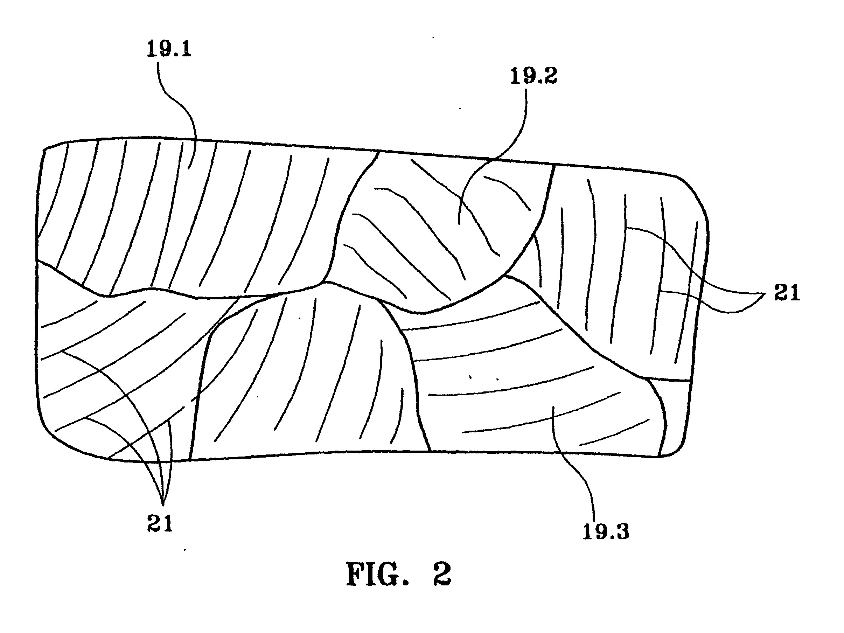

Sur la figure 2, on peut voir un exemple d'un filet de poisson reconstitué selon la présente invention. Le filet comporte une juxtaposition de morceaux 19.1, 19.2 et 19.3 de poissons sans désorganisation des myotomes 21. Les morceaux 19.1 à 19.3 ont des dimensions qui sont comprises entre 1 et 6 cm, de préférence entre 2 et 4 cm, par exemple égales à 2 cm ou 3 cm. Le filet reconstitué est fait d'au moins 80 % de morceaux de cette taille et a la taille d'un filet naturel ou une taille correspondant à une portion individuelle.

Nous allons maintenant donner quelques exemples non limitatifs de formulations susceptibles d'être mises en oeuvre par le procédé selon la présente invention. Les pourcentages sont des pourcentages en poids.

Filet de merlan frais additionné de Pholyphosphates (0,5 %) et Carraghénanes (0,2 %) placé dans un pétrin équipé d'une double enveloppe. Mélange à faible vitesse. La température du produit est maintenue inférieure à 5° C par une circulation d'eau glacée dans la double enveloppe. 100 grammes de produit sont ensuite poussés dans un moule en forme de filet, celui-ci est ensuite operculé sous vide, et placé à l'autoclave avec une montée à 80° C et pendant 5 minutes et un maintien à 80° C pendant 1 heure. Après refroidissement, une mesure du taux d'exsudation est réalisée, et comparée au taux d'exsudation obtenu pour un produit ayant subi le même traitement, mais en absence de rétenteurs d'eau :

| TRAITEMENT | Exsudation le jour du traitement (en %) | Exsudation après 10 jours de conservation à 4° C (en %) |
|---|---|---|
| sans additifs | 10.5 | 14 |
| | | |
| avec additifs (Polyphosphates +Carraghénanes) | 0.34 | 2.5 |

### Exemple 2 :

Une série d'expériences est réalisée à partir de saumon congelé avec 0,3 % de polyphosphates. Le malaxeur utilisé est un malaxeur de type Stéphan, non thermostaté, comportant les équipements pour faire le vide et modifié pour pouvoir travailler à très faible vitesse. L'énergie apportée est nécessaire et suffisante pour dégeler le filet de saumon pendant l'opération, par ailleurs la durée totale du traitement est suffisamment courte pour que le poisson ne se réchauffe pas au delà de 4° C. Le premier essai consiste à réaliser l'opération de mélange à pression atmosphérique. Dans le second essai, un vide partiel (8 x 10⁴ Pa) est réalisé pendant l'opération de mélange. Après mélange, le produit obtenu est moulé en forme de dame de saumon, le contenant est ensuite operculé et traité thermiquement dans un tunnel à vapeur : pendant 10 minutes dans un module à 80° C ou pendant 35 minutes dans un module à 75° C. Après refroidissement, les taux d'exsudation sont évalués comme dans l'exemple 1 :

| TRAITEMENT | Exsudation le jour du traitement (en %) | Exsudation après 10 jours de conservation à 4° C (en %) |
|---|---|---|
| Pression atmosphérique | 1.70 | 5 |
| Vide partiel | 1.25 | 3 |

Le malaxage sous vide améliore modérément les qualités de rétention d'eau du produit ainsi traité.

### Exemple 3 :

Filets de cabillaud frais additionnés d'un mélange de polyphosphates, caroube et sel, introduits dans une baratte.

Mélange à basse vitesse de rotation pendant 5 minutes.

Incorporation d'eau-glace pilée pour maintenir la température du mélange autour de 0° C.

Dosage de portions de 100 g déposées dans un emballage complexe carton/polyester (résistant haute température), operculé sous vide et subissant un traitement de cuisson-pasteurisation en tunnel micro-ondes pour atteindre une température à coeur de 80° C. Le produit obtenu se conserve 60 jours au froid (à la température inférieure à +5° C), sans modification des propriétés organoleptiques et sans exsudation significative du filet.

### Exemple 4 :

Chair blanche de crabe (coffre + pattes) malaxée avec une solution salée de polyphosphates, carréghénanes et arôme renforçateur du goût crabe, dans un mélangeur à pâles (à vitesse de 5 tours/min.) pendant 1 h 30.

Dosage sous vide dans un contenant en verre ayant la forme d'une pince de crabe, pose de couvercle puis cuisson en autoclave, avec une pression de 3 x 10⁵ Pa pendant 1 h 30 à basse température (72° C) pour réduire les exsudats et garder les propriétés des fibres de crabe.

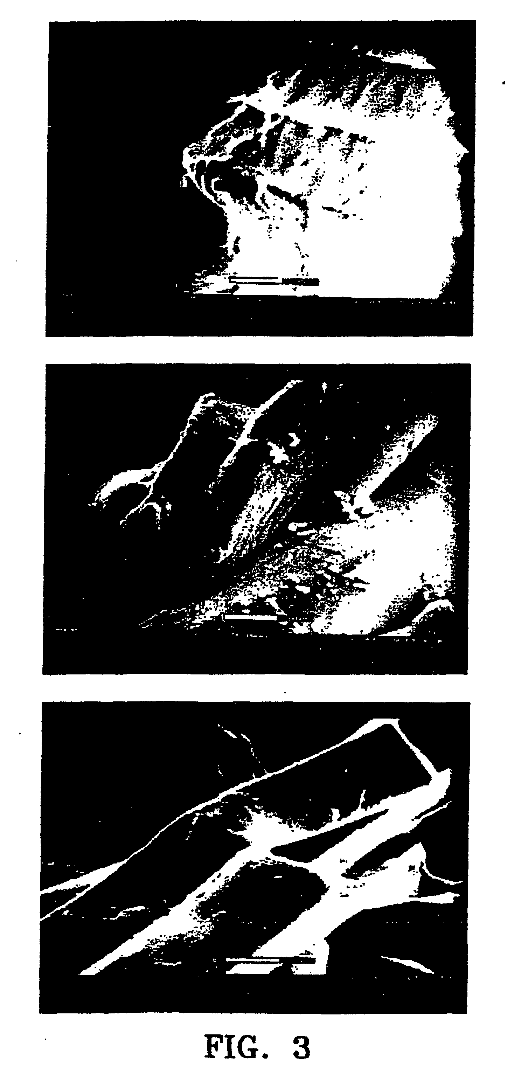

Sur la figure 3, on peut voir les fibres de chair de poisson avec une section rectangulaire ayant subi une cuisson sous vide de type connu. Elles sont plates et ne présentent pas un aspect "plein" gonflé rempli d'eau.

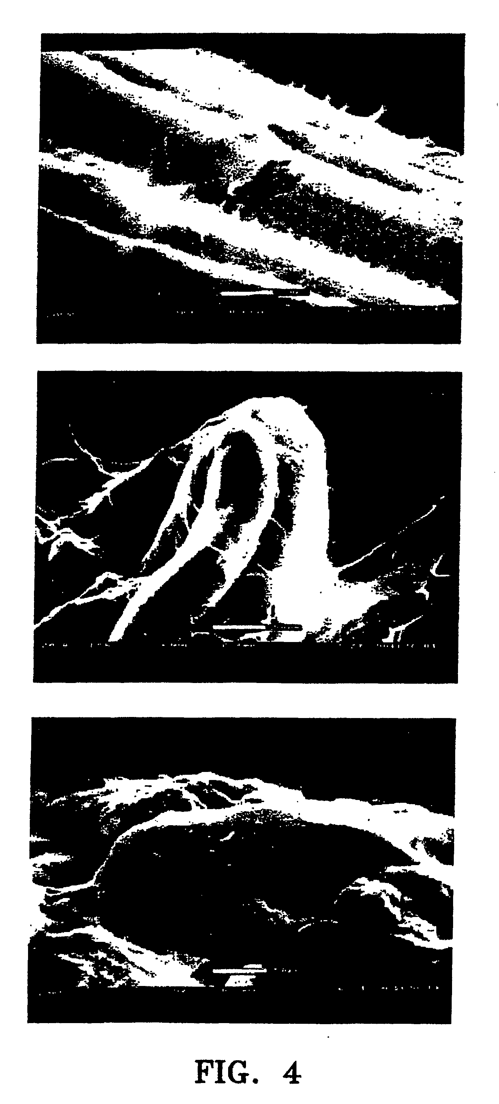

Sur la figure 4, on peut voir les fibres analogues de chair de poisson ayant subi le traitement selon l'invention suivi par une cuisson sous vide, présentant également une section rectangulaire, mais sont beaucoup moins géométriques, plus arrondis avec un aspect plein.

Les images des figures 3 et 4 ont été obtenues sans destruction de la préparation avec une énergie par électron de 20 keV (3,204 x 10⁻¹⁵J) et un grossissement de 300 fois. Le segment noir et blanc des images correspond à 50 µm.

La présente invention s'applique notamment à l'industrie alimentaire.

La présente invention s'applique principalement à la transformation de poisson.

## Revendications

1. Procédé de préparation d'un aliment à base de chair de poisson ou de crustacé, **caractérisé en ce qu'**il comporte une étape d'introduction dans un appareil de mélange (1) de la chair de poisson et/ou de crustacé et d'un composé rétenteur d'eau, notamment d'un hydrocolloïde, et à effectuer un mélange pendant une durée comprise entre un quart d'heure et cinq heures permettant la pénétration du composé rétenteur d'eau au coeur des morceaux de la chair de poisson et/ou de crustacé sans destruction de la structure de cette chair, à une température comprise entre -5° C et 2° C et à une pression comprise entre 0,45 et 0,65.10⁵ Pa.

2. Procédé selon la revendication 1, **caractérisé en ce que** la chair de poisson ou de crustacé comporte des morceaux ayant des dimensions supérieures à 1 cm.

3. Procédé selon la revendication 1 ou la revendication 2, **caractérisé en ce que** l'appareil de mélange est choisi parmi : une baratte (1), un mélangeur, un agitateur, un homogénéisateur, un appareil piezo-électrique générant des vibrations acoustiques, ultra sonores ou infrasonores.

4. Procédé selon la revendication précédente, caractérisé en ce l'appareil de mélange est une baratte (1).

5. Procédé selon la revendication 1, **caractérisé en ce que** le mélange s'effectue pendant une durée comprise entre une heure et trois heures.

6. Procédé selon l'une quelconque des revendications précédentes **caractérisé en ce que** le mélange se fait dans une baratte à une vitesse inférieure à un tour par minute.

7. Procédé selon l'une quelconque des revendications précédentes, **caractérisé en ce qu'**il comporte une étape de refroidissement.

8. Procédé selon l'une quelconque des revendications précédentes, **caractérisé en ce que** le refroidissement est assuré par introduction dans l'appareil de mélange (1) d'azote (8) à partir d'une source d'azote liquide.

9. Procédé de fabrication d'un aliment, **caractérisé en ce qu'**il comporte une étape de mélange selon l'une quelconque des revendications précédentes, suivie par un dosage et/ou formage de la masse de chair de poisson texturé obtenu.

10. Procédé selon la revendication 9, **caractérisé en ce que** le formage est effectué à une pression inférieure à 700.000 Pa.

11. Procédé selon la revendication 9 ou 10, **caractérisé en ce que** lors du dosage et/ou formage, on introduit une masse de chair de poisson et/ou de crustacé texturée dans un contenant (13) ayant la forme d'un élément du poisson ou d'un crustacé à reproduire, notamment d'un filet ou d'une darne.

12. Procédé selon la revendication 11, **caractérisé en ce que** le contenant est une barquette alimentaire en matière plastique et **en ce qu'**il comporte une étape de pose sous vide d'un opercule hermétique.

13. Procédé selon l'une quelconque des revendications précédentes, **caractérisé en ce qu'**il comporte en outre une étape de cuisson en autoclave.

14. Procédé selon l'une quelconque des revendications précédentes, **caractérisé en ce qu'**il comporte une étape de surgélation de l'aliment.

## Claims

1. Process for preparing a foodstuff based on fish or shellfish meat, **characterised in that** it comprises a step of placing fish and/or shellfish meat and a water-retaining compound, particularly a hydrocolloid, in a mixing apparatus (1), and mixing them for a period of time of between a quarter of an hour and five hours which enables the water-retaining compound to penetrate to the core of the pieces of fish and/or shellfish meat without destroying the structure of this meat, at a temperature between -5°C and 2°C at a pressure of between 0.45 and 0.65.10⁵Pa.

2. Process according to claim 1, **characterised in that** the fish or shellfish meat comprises pieces larger than 1 cm in size.

3. Process according to claim 1 or 2, **characterised in that** the mixing apparatus is selected from among: a churn (1), a mixer, a stirrer, a homogeniser or a piezoelectric apparatus generating acoustic, ultrasonic or infrasonic vibrations.

4. Process according to the preceding claims, **characterised in that** the mixing apparatus is a churn (1).

5. Process according to claim 1, **characterised in that** the mixing is carried out for a length of time of between one hour and three hours.

6. Process according to any one of the preceding claims, **characterised in that** the mixing is carried out in a churn at a speed of less than one revolution per minute.

7. Process according to any one of the preceding claims, **characterised in that** it comprises a cooling step.

8. Process according to any one of the preceding claims, **characterised in that** the cooling is carried out by adding nitrogen (8) from a liquid nitrogen source to the mixing apparatus (1).

9. Process for producing a foodstuff, **characterised in that** it comprises a mixing step according to any one of the preceding claims, followed by measuring out and/or forming of the mass of textured fish meat obtained.

10. Process according to claim 9, **characterised in that** the forming is carried out at a pressure below 700,000 Pa.

11. Process according to claim 9 or 10, **characterised in that**, during the measuring out and/or forming, a mass of textured fish and/or shellfish meat is placed in a container (13) in the shape of a part of the fish or the shellfish which is to be reproduced, notably a fillet or a steak.

12. Process according to claim 11, **characterised in that** the container is a food tray made of plastics and **in that** the process comprises a step of vacuum sealing with a hermetic seal.

13. Process according to any one of the preceding claims, **characterised in that** it further comprises a step of cooking in an autoclave.

14. Process according to any one of the preceding claims, **characterised in that** it comprises a step of freezing the foodstuff.

## Patentansprüche

1. Verfahren zur Herstellung eines Nahrungsmittels auf der Basis von Fisch- oder Krustentier-Fleisch, **dadurch gekennzeichnet, dass** es eine Stufe der Einführung des Fisch- und/oder Krustentier-Fleisch und einer wasserbindenden Verbindung, insbesondere eines Hydrocolloids, in eine Mischapparatur (1) und Durchführen eines Mischens während einer Dauer zwischen einer Viertelstunde und 5 h , das die Penetration der wasserbindenden Verbindung in das Innere der Stücke des Fisch- und/oder Krustentier-Fleisch ohne Zerstörung der Struktur des Fleisch ermöglicht, bei einer Temperatur zwischen -5°C und 2°C und bei einem Druck zwischen 0,45 und 0,65 x 10⁵ Pa umfasst.

2. Verfahren nach Anspruch 1, **dadurch gekennzeichnet, dass** das Fisch- oder Krustentier-Fleisch Stücke umfasst, die Abmessungen von über 1 cm haben.

3. Verfahren nach Anspruch 1 oder Anspruch 2, **dadurch gekennzeichnet, dass** die Mischapparatur ausgewählt ist unter: einer Buttermaschine (1), einer Mischapparatur, einem Rührer, einem Homogenisator, einem piezoelektrischen Gerät, das akustische Schwingungen, Ultraschall oder Infraschall erzeugt.

4. Verfahren nach einem der vorangehenden Ansprüche, **dadurch gekennzeichnet, dass** die Mischapparatur eine Buttermaschine (1) ist.

5. Verfahren nach Anspruch 1, **dadurch gekennzeichnet, dass** das Mischen für eine Dauer zwischen 1 Stunde und 3 Stunden durchgeführt wird.

6. Verfahren nach einem der vorangehenden Ansprüche, **dadurch gekennzeichnet, dass** das Mischen in einer Buttermaschine bei einer Geschwindigkeit von weniger als 1 Umdrehung pro Minute erfolgt.

7. Verfahren nach einem der vorangehenden Ansprüche, **dadurch gekennzeichnet, dass** es eine Kühlungsstufe umfasst.

8. Verfahren nach einem der vorangehenden Ansprüche, **dadurch gekennzeichnet, dass** die Abkühlung durch Einführung von Stickstoff (8) aus einer Quelle für flüssigen Stickstoff in die Mischapparatur (1) sichergestellt wird.

9. Verfahren zur Herstellung eines Nahrungsmittels, **dadurch gekennzeichnet, dass** es eine Stufe des Mischens nach einem der vorangehenden Ansprüche, gefolgt von einer Dosierung und/oder Formung der erhaltenen texturierten Masse aus Fischfleisch, umfasst.

10. Verfahren nach Anspruch 9, **dadurch gekennzeichnet, dass** die Formung bei einem Druck unter 700.000 Pa erfolgt.

11. Verfahren nach Anspruch 9 oder 10, **dadurch gekennzeichnet, dass** man während der Dosierung und/oder Formung eine texturierte Masse aus Fisch- und/oder Krustentier-Fleisch in ein Behältnis (13), das die Form eines Elements des Fischs oder eines Krustentiers hat, um insbesondere ein Filet oder ein Fischfilet nachzubilden, einführt.

12. Verfahren nach Anspruch 11, dadurch **gekenn** **zeichnet,** dass das Behältnis ein Lebensmittelbehälter aus Kunststoff ist, und dass es eine Stufe des Aufbringens eines dichten Deckels im Vakuum umfasst.

13. Verfahren nach einem der vorangehenden Ansprüche, **dadurch gekennzeichnet, dass** es außerdem eine Stufe des Kochens im Autoklaven umfasst.

14. Verfahren nach einem der vorangehenden Ansprüche, **dadurch gekennzeichnet, dass** es eine Stufe des Tiefgefrierens des Nahrungsmittels umfasst.
